(19) **Europäisches Patentamt European Patent Office Office européen des brevets**

(11) **EP 1 771 846 B1**

(12) **EUROPEAN PATENT SPECIFICATION**

(45) Date of publication and mention of the grant of the patent:
**28.05.2008 Bulletin 2008/22**

(21) Application number: **05757884.1**

(22) Date of filing: **28.06.2005**

(51) Int Cl.:
***G11B 7/09*** *(2006.01)*      ***G02B 27/00*** *(2006.01)*

(86) International application number:
**PCT/IB2005/052144**

(87) International publication number:
**WO 2006/008668 (26.01.2006 Gazette 2006/04)**

(54) **METHOD AND APPARATUS FOR SCANNING DATA STORED ON AN OPTICAL STORAGE MEDIUM**

VERFAHREN UND VORRICHTUNG ZUM SCANNEN VON AUF EINEM OPTISCHEN SPEICHERMEDIUM GESPEICHERTEN DATEN

PROCEDE ET APPAREIL DE SCANNAGE DES DONNEES MEMORISEES SUR UN SUPPORT OPTIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **15.07.2004 EP 04300445**

(43) Date of publication of application:
**11.04.2007 Bulletin 2007/15**

(73) Proprietor: **Koninklijke Philips Electronics N.V. 5621 BA Eindhoven (NL)**

(72) Inventors:
• **STALLINGA, Sjoerd, Société Civile SPID F-75008 Paris (FR)**

• **HOOFT, Gert, Société Civile SPID F-75008 Paris (FR)**
• **SCHLEIPEN, Johannes, Société Civile SPID F-75008 Paris (FR)**

(74) Representative: **Uittenbogaard, Frank Philips Intellectual Property & Standards P.O. Box 220 5600 AE Eindhoven (NL)**

(56) References cited:
**US-A- 3 931 460       US-A- 4 118 735 US-A- 4 531 206**

## Description

### FIELD OF THE INVENTION

The present invention relates to a method and an apparatus for scanning data stored along a track on an optical storage medium. Particularly, the present invention relates to improved tracking of an optical disk.

### BACKGROUND OF THE INVENTION

An optical disk is read out with a beam of light focused into a small spot by an objective lens. The spot is scanned along a spiral track, and the information is retrieved from a photo-detector signal. This information consists of the data signal and of error signals to keep the scanning spot in focus and on track. The use of multiple scanning spots, for example two or more scanning spots can improve the retrieval of information from the photo-detector signals for each of the scanning spots.

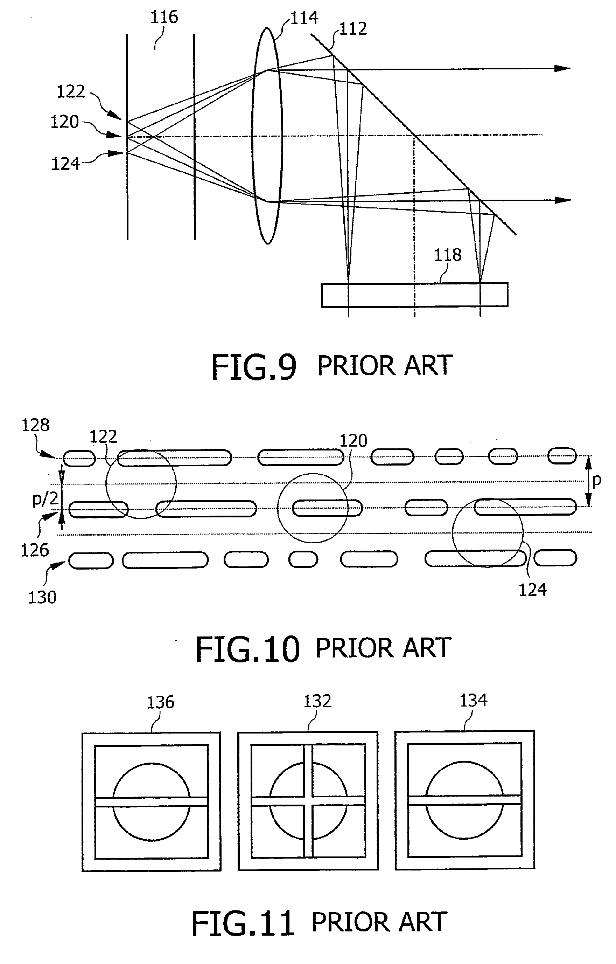

A setup for cross-talk cancellation (XTC) as an example for the use of multiple scanning spots is shown in Figure 9. Light emitted from a laser is reflected by a beam splitter 112. The reflected light passes a lens 114, and the light is focussed onto a surface of an optical disk 116. A grating 118 is placed into the parallel beam that is incident on the objective lens, here before the beam splitter 112. Thereby, the beam is split into a central beam 120 and two satellite beams 122, 124. The three beams 120, 122, 124 form three scanning spots on the disk 116.

Figure 10 shows three neighbouring tracks 126, 128, 130 of an optical disk and three scanning spots 120, 122, 124 that are projected on the optical disk. The radial position of the two satellite spots 122, 124, i.e. the position in the direction perpendicular to the tracks, is typically half (p/2) to one (p) track pitch away from the central track 126.

Figure 11 shows three segments 132, 134, 136 of a photo-detector. These three segments 132, 134, 136 capture the three signals from the three light spots formed on the disk. In the present example, the segments 132, 134, 136 are divided into sub-segments which is, however, not required for the XTC-technique. A further processing of the signals detected by the segments 132, 134, 136 is required to suppress the noise of the main signal due to cross-talk from neighbouring tracks.

Another example in which a plurality of beam spots is used is the so-called three spots push-pull (3SPP) method of radial tracking. The two satellite beams are now half a track away from the central track, and the three segments of the photo-detector are split into (at least) two halves, so that three push-pull signals (i.e. the difference signals between the two sub-segments), are generated. A suitably weighted sum of the three signals turns out to be very robust to beamlanding, i.e. the relative displacement between the photo-detector and the spot on the detector. Further examples in which multiple beam spots are used are multi-track readout and 2D-coding based architectures.

All these techniques have the disadvantages that (i) multiple scanning spots must be formed, and (ii) that multiple segments must be present at the photo-detector. The first point results in a reduction of the power throughput for the main spot, which in turn reduces write speed for recordable (R) or rewritable (RW) drives. The second point entails a more complicated photo-detector design and the need to transport the additional high-frequent signals over a flex to the processing integrated circuits of the optical disk drive.

An object of the present invention is to provide a method and an apparatus for scanning data stored on an optical storage medium for which only a single scanning spot is required.

### SUMMARY OF THE INVENTION

The above objects are solved by the features of the independent claims, their preambles reflecting US-A-4,531,206. Further developments and preferred embodiments of the invention are outlined in the dependent claims.

In accordance with the present invention; there is provided a method of scanning data stored along a track on an optical storage medium, comprising the steps of:

> projecting at least one light beam on the optical storage medium, thereby creating a scanning spot, the scanning spot essentially following a track;
> detecting light reflected by the optical storage medium;
> retrieving information stored on the optical storage medium from the detected light; and
> varying the relative position of the scanning spot and the track so that the scanning spot temporarily leaves the track;

wherein the variation of the relative position of the scanning spot and the track occurs, at least temporary, at a frequency ν of

$$\nu = \beta \cdot S \cdot 4 \cdot NA / \lambda,$$

wherein NA is the numerical aperture of the light beam, λ is the wavelength of the light, S is the scanning speed, and $\beta \geq 0.05$.

Thus, the invention is based on a change of the path that the single scanning spot is following. Conventionally the spot is scanned along a single track. It is proposed here to add a periodic variation of the radial position of the scanning spot. The beam reflected/diffracted by the data surface of the disk can be captured at a single segment of a photo-detector. By sampling the signal sufficiently fast, the signal is measured as a function of both the tangential and the radial scanning coordinate. If the amplitude of the wobble is about half a track this is sufficient to do XTC and 3SPP with only a single scanning spot and a single (possibly sub-segmented) photo-detector. In order to obtain full information at the extreme radial positions it is required to perform the sampling with at least the Nyquist-rate. Thus, a sampling has to be performed every $\lambda/4NA$. For the example of blue-ray disk conditions of wavelength $\lambda$ = 405 nm and numerical aperture NA = 0.85, a scanning has to be performed every 0.12 $\mu$m. With a scanning speed of 5 m/s this entails a wobble frequency of 42 MHz. The factor $\beta$ from the above mentioned formula considers that optical scanning systems use an error correction code (ECC). Thus, it may be allowed to use a frequency lower than $S \cdot 4NA/\lambda$. Therefore, the wobbling frequency might be reduced as to the amount of one percent of the Nyquist-rate or, preferably, to about five percent of the Nyquist-rate in order to still provide satisfying scanning results if ECC is used. In any case, the wobbling frequency has to be higher than the bandwidth of the servo mechanism of the disk drive that is generally used for keeping the scanning spot on track. For the above mentioned frequencies, this is automatically given for common servo mechanisms.

Preferably, the light beam is generated by a wavelength tunable semiconductor laser, and a wavelength change is translated into a local displacement of the light beam. Thereby, it is possible to achieve wobbling frequencies as mentioned above.

According to a further preferred embodiment of the present invention the light beam is generated by a semiconductor laser, and the light beam is displaced by varying electromagnetic properties that influence the direction of the light beam emitted by the semiconductor laser. For example, a laser diode can be provided with two further contacts. Over these contacts the electric field distribution can be varied by applying a voltage. Due to an asymmetric electric field distribution a laser light beam emitted by the laser diode can be displaced.

According to a still further embodiment a plurality of light beams are selectively emitted, each light beam being emitted into an associated direction. For example, an array of closely spaced, individually addressable, laser diodes is used. Each laser diode is driven with a pulse in consecutive order, so that, effectively, a single spot with wiggling radial position is produced on the disk.

Preferably, the step of varying the relative position is performed during data read out, and the relative position is not varied during data writing. This ensures that a proper tracking takes place during data read out and that data is only written on the central track.

According to a preferred embodiment, during a writing process, data is written into batches in a write mode and in between the batches the write mode is changed to a read mode in which the relative position is varied. Particularly, when 3SPP tracking is used, the channel bit stream that is written to the disk can be divided into batches. In between the batches, the drive is switched into a read mode, including the wiggle. This allows for extracting the relevant radial tracking information, while the wiggle is not influencing the write operation. The pauses between the batches may be very short as compared to the length of the batches. Generally, for the 3SPP application a variation of the radial position is not needed very frequently. For example, a frequency of 10 to 100 kHz is sufficient. However, when a variation is to be executed, this has to be done within a small time span, correspond-ing to a bandwidth of the wiggle movement in the frequency range according to the present invention.

$\beta$ is in the range of $\geq 0.05$. As mentioned above, this can be sufficient when an error correction code is used.

Preferably, $\beta$ is in the range of 1. Thus, the scanning can take place with the Nyquist-rate.

In accordance with the present invention, there is further provided an apparatus for scanning data stored along a track on an optical storage medium, comprising:

means for projecting at least one light beam on the optical storage medium, thereby creating a scanning spot, the scanning spot essentially following a track;
means for detecting light reflected by the optical storage medium;
means for retrieving information stored on the optical storage medium from the detected light;
means for varying the relative position of the scanning spot and the track so that the scanning spot temporarily leaves the track;

wherein the variation of the relative position of the scanning spot and the track occurs, at least temporary, at a frequency $\nu$ of

$$\nu = \beta \cdot S \cdot 4 \cdot NA / \lambda \quad ,$$

wherein NA is the numerical aperture of the light beam, $\lambda$ is the wavelength of the light, S is the scanning speed, and $\beta > 0.05$.

The present invention further relates to an optical device comprising an apparatus according to the present invention.

These and other aspects of the invention will be apparent from and elucidated with reference to the embodiments described hereinafter.

## BRIEF DESCRIPTION OF THE DRAWINGS

The invention will now be described in more detail by way of example with reference to the accompanying drawings, in which :

- Figure 1 shows tracks on an optical disk and the path of a scanning spot, in accordance with the present invention;

- Figures 2a and 2b show a semiconductor laser in a front view and a top view, respectively;
- Figure 3a and Figure 3b show a wavelength tuneable semiconductor laser in a side view and in a top view, respectively;
- Figure 4 shows a pair of gratings to be used with a wavelength tuneable laser according to Figure 3;
- Figure 5 shows a top view of a wavelength tuneable semiconductor laser;
- Figure 6 shows a semiconductor laser with additional contacts for applying a voltage;
- Figure 7 shows a further example of a path of a light spot on an optical disk;

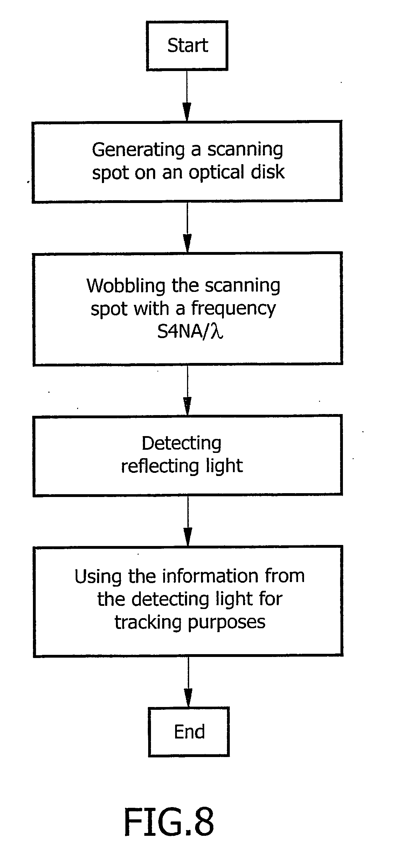

- Figure 8 shows a flow chart of a method according to the present invention;
- Figure 9 shows a setup for generating several beams to be projected onto an optical disk according to prior art;
- Figure 10 shows tracks of an optical disk and multiple light spots projected onto the optical disk, according to prior art; and
- Figure 11 shows segments of a photo-detector according to prior art.

**DETAILED DESCRIPTION OF THE INVENTION**

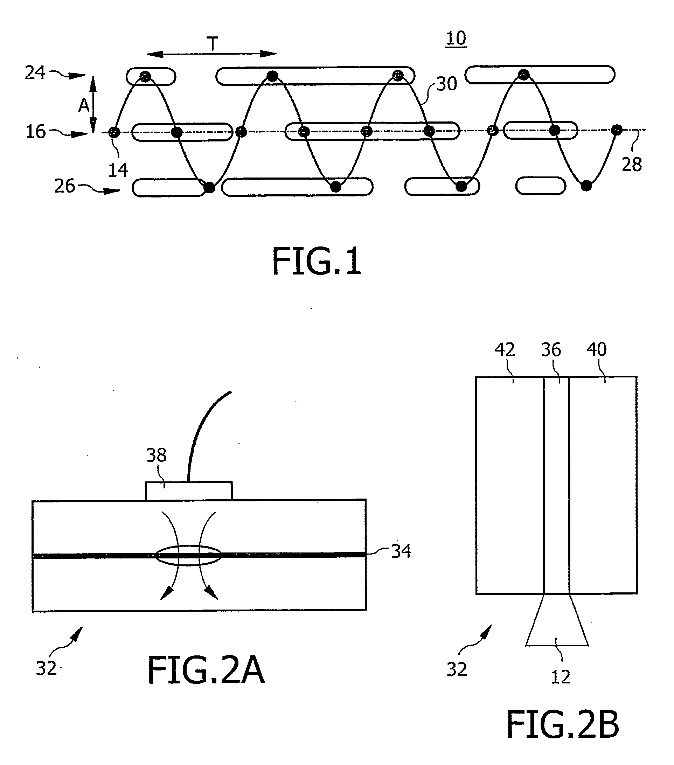

Figure 1 shows tracks on an optical disk and the path of a scanning spot, in accordance with the present invention. A central track 16 and two neighbouring tracks 24, 26 are shown that are provided on an optical disk 10. The path of the scanning spots 14 in a conventional optical disk drive is shown with a dashed line 28. The path of a scanning spot according to the present invention is shown with a solid line 30. The periodical dots on line 30 represent the sampling points. The amplitude of the wiggle is A, the period is T. In this particular case, the wiggle amplitude A is exactly one track, however, this is not a requirement for the invention. In this example, the main track 16 is sampled every T/2, whereas the two adjacent tracks 24, 26 are sampled every T. In case T is smaller than $\lambda/4NA$, the full signal at the adjacent tracks may be recovered. As discussed, sampling at such a high rate may not be necessary for the present invention.

Figures 2a and 2b show a semiconductor laser in a front view and a top view, respectively. By a layered structure a semiconductor laser 32 is provided. The semiconductor laser 32 comprises a thin active layer 34 of a typical thickness of 150 nm. Only a stripe 36 of the active layer 34 is conducting. Thus, when a current is injected via contact 38, this current only flows through the narrow stripe 36 which is typically 5 mm wide. The front face 40 and the rear face 42 of the structures are reflecting so that they define a laser cavity. A beam of laser light 12 is emitted by the semiconductor laser 32.

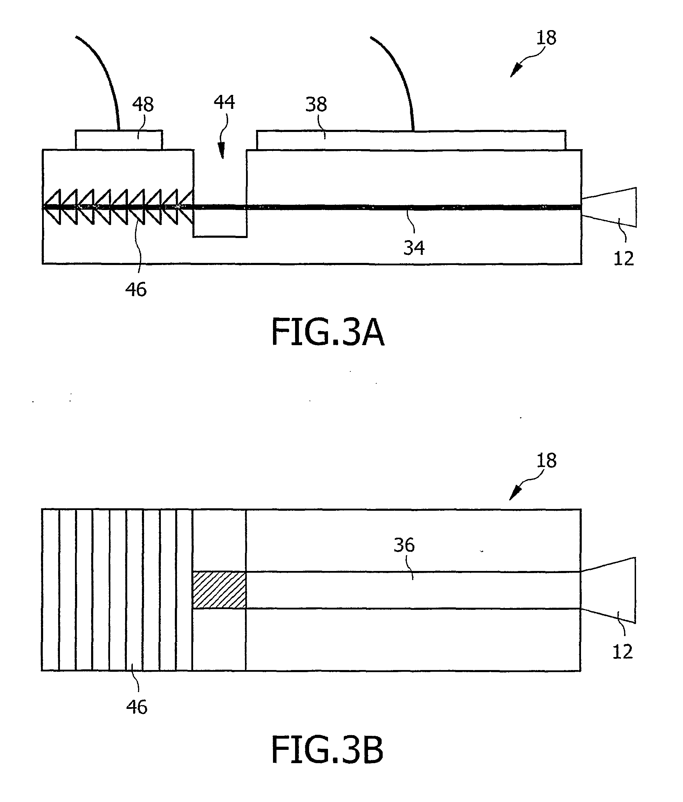

Figure 3a and Figure 3b show a wavelength tuneable semiconductor laser in a side view and in a top view, respectively. A current is injected into the contact 38 of the wavelength tuneable laser diode 18. The current is injected into the active layer 34 through the stripe 36. The light generated in the cavity passes through a gap 44 into an additional structure with a Bragg-reflector/grating 46. The pitch and the effective refractive index of this structure control the wavelength of the light 12 that is emitted at the opposite side of the laser 18. The effective refractive index may be controlled by a secondary current that is applied over a further contact 48. By this signal applied over the contact 48 the wavelength of the laser 18 can be tuned. On the basis of such a tuned wavelength, a local displacement may be achieved as will be described below.

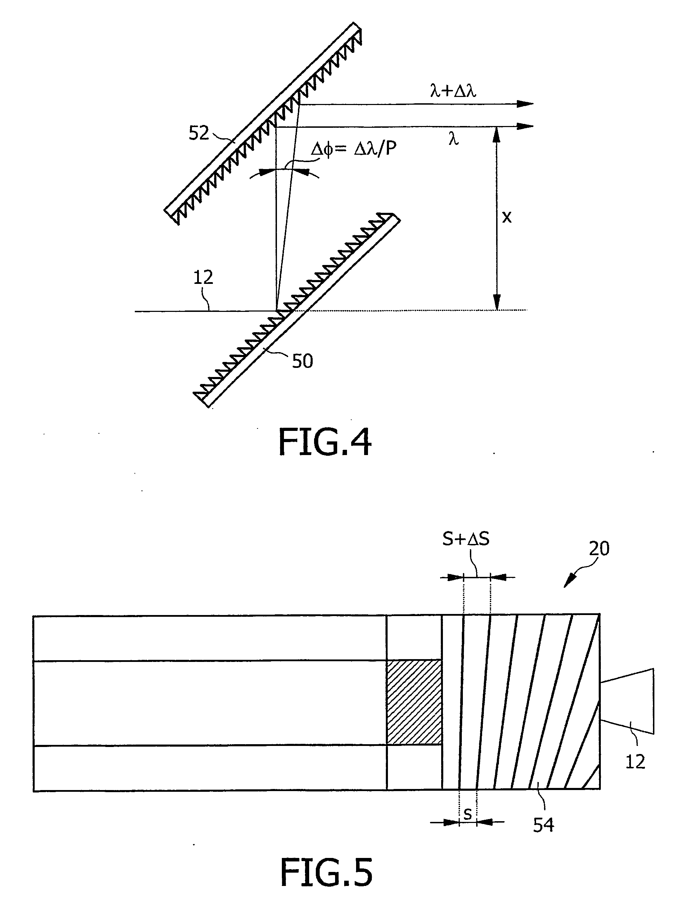

Figure 4 shows a pair of gratings to be used with a wavelength tuneable laser according to Figure 3. The light beam 12 from a wavelength tuneable laser, as for example shown in Figure 3, is projected onto a first grating 50 and from there on to a second grating 52. The gratings 50, 52 have a pitch p. When the wavelength changes from $\lambda$ to $\lambda+\Delta\lambda$ the diffraction angle changes with $\Delta\phi = \Delta\lambda/p$. This results in a lateral shift of $\Delta x = x\Delta\phi$ (x/p) $\Delta\lambda$. When $\Delta x = 2\mu m$ and $\Delta\lambda = 5$ nm, we must have x/p = 400. Thus, for example x = 500 $\mu$m and p = 1.25 $\mu$m will do, which are reasonable numbers. The grating pair may also be etched on the surfaces of a prism.

Figure 5 shows a top view of a wavelength tuneable semiconductor laser. In this embodiment a Bragg-reflector 54 with a variable pitch is used. The pitch of the Bragg-reflector 54 changes from s on side to s+$\Delta$s on the other side. The change in pitch $\Delta$s is very much exaggerated in the drawing. When a tuning signal is changed, the lateral position where the light leaves the cavity will change as well.

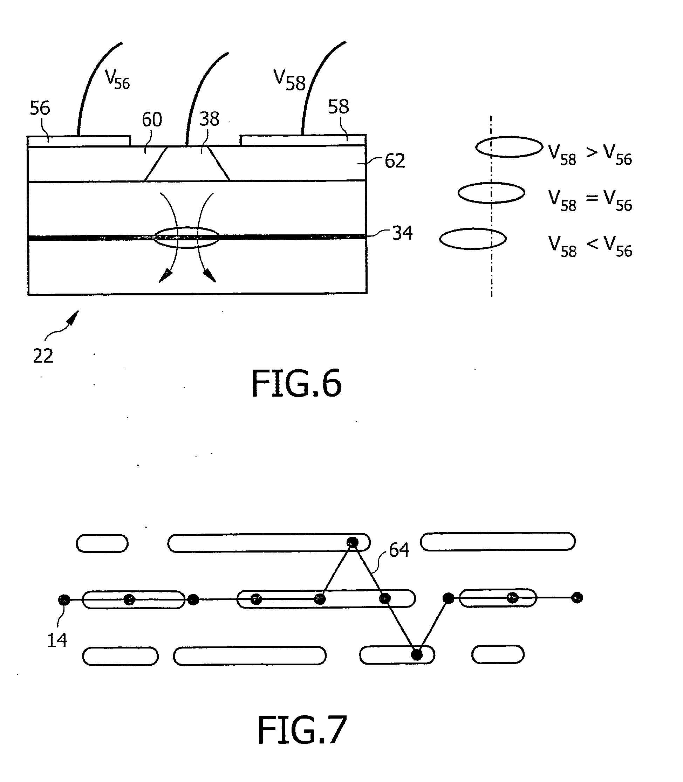

Figure 6 shows a semiconductor laser with additional contacts for applying a voltage. The contact 38 for current injection is separated from two further contacts 56, 58 by two insulating layers 60, 62. Voltages $V_{56}$ and $V_{58}$ applied to these contacts 56, 58 make the electric field distribution in the device left-right asymmetric (provided that the two voltages are unequal). This will induce an asymmetry in the refractive index of the active layer, which makes the transversal mode of the laser cavity asymmetric. The light distribution at the exit surface of the device will then be asymmetric as well, so that the source point is effectively displaced from left to right (or vice versa).

The embodiment described in relation to Figure 6 can also be varied in that currents are injected over the two additional contacts 56, 58. If these currents are injected with different amounts, the desired asymmetry is achieved.

Figure 7 shows a further example of a path of a light spot on an optical disk. A trajectory 64 of the scanning spot with intermittent wiggles is shown. Such an intermittent wobbling is sufficient for 3SPP. For XTC a more continuous sampling of the neighbouring tracks is required.

It is noted that the embodiments of the present invention can be different from the examples shown in the drawings and described above. For example, it is not required to use only one scanning spot that oscillates relative to the tracks. Rather, the prior art technique of using several scanning spots can be combined with the wobbling of the scanning spot according to the present invention.

Equivalents and modifications not described above may also be employed without departing from the scope of the invention, which is defined in the accompanying claims.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

**Claims**

1. A method of scanning data stored along a track on an optical storage medium (10), comprising the steps of:

   projecting at least one light beam (12) on the optical storage medium, thereby creating a scanning spot (14), the scanning spot essentially following a track (16);
   detecting light reflected by the optical storage medium;
   retrieving information stored on the optical storage medium from the detected light; and
   varying the relative position of the scanning spot and the track so that the scanning spot temporarily leaves the track;

   **characterized in that** the variation of the relative position of the scanning spot and the track occurs, at least temporary, at a frequency $\nu$ of

   $$\nu = \beta \cdot S \cdot 4 \cdot NA / \lambda \ ,$$

   wherein NA is the numerical aperture of the light beam (12), $\lambda$ is the wavelength of the light, S is the scanning speed, and $\beta \geq 0.05$.

2. The method according to claim 1, wherein the light beam (12) is generated by a wavelength tunable semiconductor laser (18, 20), and a wavelength change is translated into a local displacement of the light beam (12).

3. The method according to claim 1, wherein the light beam (12) is generated by a semiconductor laser (22), and the light beam (12) is displaced by varying electromagnetic properties that influence the direction of the light beam (12) emitted by the semiconductor laser.

4. The method according to claim 1, wherein a plurality of light beams (12) are selectively emitted, each light beam (12) being emitted into an associated direction.

5. The method according to claim 1, wherein the step of varying the relative position is performed during data read out, and the relative position is not varied during data writing.

6. The method according to claim 1, wherein, during a writing process, data is written into batches in a write mode and in between the batches the write mode is changed to a read mode in which the relative position is varied.

7. The method according to claim 1, wherein $\beta$ is in the range of 1.

8. An apparatus for scanning data stored along a track on an optical storage medium, comprising:

   means for projecting at least one light beam (12) on the optical storage medium, thereby creating a scanning spot, the scanning spot essentially following a track;
   means for detecting light reflected by the optical storage medium;
   means for retrieving information stored on the optical storage medium from the detected light;
   means for varying the relative position of the scanning spot and the track so that the scanning spot temporarily leaves the track;

   **characterized in that** the variation of the relative position of the scanning spot and the track occurs, at least temporary, at a frequency $\nu$ of

   $$\nu = \beta \cdot S \cdot 4 \cdot NA / \lambda \ ,$$

   wherein NA is the numerical aperture of the light beam (12), $\lambda$ is the wavelength of the light, S is the scanning speed, and $\beta \geq 0.05$.

9. An optical device comprising an apparatus according to claim 8.

**Patentansprüche**

1. Verfahren zum Scannen von Daten, die entlang einer Spur auf einem optischen Speichermedium (10) gespeichert sind, welches die folgenden Schritte umfasst:

Projizieren mindestens eines Lichtstrahls (12) auf das optische Speichermedium, wodurch ein Abtastfleck (14) erzeugt wird, wobei der Abtastfleck im Wesentlichen einer Spur (16) folgt; Detektieren von Licht, das durch das optische Speichermedium reflektiert wird; Wiedergewinnen von Informationen, die auf dem optischen Speichermedium gespeichert sind, aus dem detektierten Licht; und Ändern der relativen Position des Abtastfleckes und der Spur, so dass der Abtastfleck zeitweilig die Spur verlässt;

**dadurch gekennzeichnet, dass** die Änderung der relativen Position des Abtastfleckes und der Spur wenigstens zeitweilig mit einer Frequenz ν von

$$\nu = \beta \cdot S \cdot 4 \cdot NA / \lambda$$

erfolgt, wobei NA die numerische Apertur des Lichtstrahls (12) ist, λ die Wellenlänge des Lichtes ist, S die Scangeschwindigkeit ist und β ≥ 0,05 ist.

2. Verfahren nach Anspruch 1, wobei der Lichtstrahl (12) von einem wellenlängenabstimmbaren Halbleiterlaser (18, 20) erzeugt wird und eine Wellenlängenänderung in eine lokale Verschiebung des Lichtstrahls (12) übersetzt wird.

3. Verfahren nach Anspruch 1, wobei der Lichtstrahl (12) von einem Halbleiterlaser (22) erzeugt wird und der Lichtstrahl (12) verschoben wird, indem elektromagnetische Eigenschaften geändert werden, welche die Richtung des Lichtstrahls (12) beeinflussen, der von dem Halbleiterlaser emittiert wird.

4. Verfahren nach Anspruch 1, wobei mehrere Lichtstrahlen (12) selektiv emittiert werden, wobei jeder Lichtstrahl (12) in einer zugehörigen Richtung emittiert wird.

5. Verfahren nach Anspruch 1, wobei der Schritt des Änderns der relativen Position während des Auslesens von Daten durchgeführt wird und die relative Position während des Schreibens von Daten nicht geändert wird.

6. Verfahren nach Anspruch 1, wobei während eines Schreibprozesses Daten in einem Schreib-Betrieb in Batches (Stapel) geschrieben werden und zwischen den Batches vom Schreib-Betrieb zu einem Lese-Betrieb gewechselt wird, in welchem die relative Position geändert wird.

7. Verfahren nach Anspruch 1, wobei β im Bereich von 1 liegt.

8. Vorrichtung zum Scannen von Daten, die entlang einer Spur auf einem optischen Speichermedium gespeichert sind, welche umfasst:

Mittel zum Projizieren mindestens eines Lichtstrahls (12) auf das optische Speichermedium, wodurch ein Abtastfleck erzeugt wird, wobei der Abtastfleck im Wesentlichen einer Spur folgt; Mittel zum Detektieren von Licht, das durch das optische Speichermedium reflektiert wird; Mittel zum Wiedergewinnen von Informationen, die auf dem optischen Speichermedium gespeichert sind, aus dem detektierten Licht; Mittel zum Ändern der relativen Position des Abtastfleckes und der Spur, so dass der Abtastfleck zeitweilig die Spur verlässt;

**dadurch gekennzeichnet, dass** die Änderung der relativen Position des Abtastfleckes und der Spur wenigstens zeitweilig mit einer Frequenz ν von

$$\nu = \beta \cdot S \cdot 4 \cdot NA / \lambda$$

erfolgt, wobei NA die numerische Apertur des Lichtstrahls (12) ist, λ die Wellenlänge des Lichtes ist, S die Scangeschwindigkeit ist und β ≥ 0,05 ist.

9. Optische Einrichtung, die eine Vorrichtung nach Anspruch 8 umfasst.

**Revendications**

1. Procédé de balayage de données mémorisées le long d'une piste sur un support de mémorisation optique (10), comprenant les étapes suivantes :

la projection d'au moins un faisceau de lumière (12) sur le support de mémorisation optique, créant de ce fait un point lumineux de balayage (14), le point lumineux de balayage suivant essentiellement une piste (16) ; la détection de la lumière réfléchie par le support de mémorisation optique ; l'extraction d'informations mémorisées sur le support de mémorisation optique de la lumière détectée, et la variation de la position relative du point lumineux de balayage et de la piste de sorte que le point lumineux de balayage quitte temporairement la piste ;

**caractérisé en ce que** la variation de la position relative du point lumineux de balayage et de la piste se produit, au moins temporairement, à une fréquence v de

$$v = \beta \cdot S \cdot 4 \cdot NA / \lambda,$$

où NA est l'ouverture numérique du faisceau de lumière (12), λ est la longueur d'onde de la lumière, S est la vitesse de balayage et β ≥ 0,05.

2. Procédé suivant la revendication 1, dans lequel le faisceau de lumière (12) est généré par un laser à semi-conducteur accordable en longueur d'onde (18, 20), et un changement de longueur d'onde est transposé en un déplacement local du faisceau de lumière (12).

3. Procédé suivant la revendication 1, dans lequel le faisceau de lumière (12) est généré par un laser à semi-conducteur (22), et le faisceau de lumière (12) est déplacé en variant des propriétés électromagnétiques qui influencent le sens du faisceau de lumière (12) émis par le laser à semi-conducteur.

4. Procédé suivant la revendication 1, dans lequel une pluralité de faisceaux de lumière (12) sont émis de manière sélective, chaque faisceau de lumière (12) étant émis dans un sens associé.

5. Procédé suivant la revendication 1, dans lequel l'étape de variation de la position relative est exécutée pendant la lecture de données, et la position relative ne varie pas pendant l'écriture de données.

6. Procédé suivant la revendication 1, dans lequel, pendant un processus d'écriture, des données sont écrites par lots dans un mode écriture et, entre les lots, le mode écriture est transformé en un mode lecture dans lequel la position relative varie.

7. Procédé suivant la revendication 1, dans lequel β est aux alentours de 1.

8. Appareil de balayage de données mémorisées le long d'une piste sur un support de mémorisation optique, comprenant :

des moyens pour projeter au moins un faisceau de lumière (12) sur le support de mémorisation optique, créant de ce fait un point lumineux de balayage, le point lumineux de balayage suivant essentiellement une piste ;
des moyens pour détecter la lumière réfléchie par le support de mémorisation optique ;
des moyens pour extraire des informations mémorisées sur le support de mémorisation optique de la lumière détectée, et
des moyens pour varier la position relative du point lumineux de balayage et de la piste de sorte que le point lumineux de balayage quitte temporairement la piste ;

**caractérisé en ce que** la variation de la position relative du point lumineux de balayage et de la piste se produit, au moins temporairement, à une fréquence v de

$$v = \beta \cdot S \cdot 4 \cdot NA / \lambda,$$

où NA est l'ouverture numérique du faisceau de lumière (12), λ est la longueur d'onde de la lumière, S est la vitesse de balayage et β ≥ 0,05.

9. Dispositif optique comprenant un appareil suivant la revendication 8.

FIG.1

FIG.2A

FIG.2B

48  44  38  18

46

34  12

## FIG.3A

18

36

46  12

## FIG.3B

$$\lambda + \Delta\lambda$$

$$\lambda$$

$$\Delta\phi = \Delta\lambda/P$$

52

12

50

X

# FIG.4

$$S + \Delta S$$

20

s

54

12

# FIG.5

$V_{56}$

$V_{58}$

56     60    38      58

62

34

$V_{58} > V_{56}$

$V_{58} = V_{56}$

$V_{58} < V_{56}$

22

## FIG.6

64

14

## FIG.7

Start

↓

Generating a scanning
spot on an optical disk

↓

Wobbling the scanning
spot with a frequency
S4NA/λ

↓

Detecting
reflecting light

↓

Using the information from
the detecting light for
tracking purposes

↓

End

# FIG.8

FIG.9 PRIOR ART

FIG.10 PRIOR ART

FIG.11 PRIOR ART

**EP 1 771 846 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4531206 A